# EUROPEAN PATENT APPLICATION

(11) **EP 3 312 746 A1**
(43) Date of publication of application: **25.04.2018**
(21) Application number: 17197013.0
(22) Date of filing: 18.10.2017
(51) Int. Cl.: G06F 17/50

(54) **SYSTEM AND METHOD FOR SIMULATING AN OPERATION OF A GAS TURBINE ENGINE ON AN ENGINE SIMULATOR IN COMMUNICATION WITH A FADEC**

(30) Priority: 18.10.2016 US 201615296859
(71) Applicant: United Technologies Corporation, Farmington, CT 06032 (US)
(72) Inventor: SEMBIANTE, David, Betheny, CT Connecticut 06524 (US); SIRICA, Steven J., Ellington, CT Connecticut 06029 (US); FUKSMAN, Igor, South Glastonbury, CT Connecticut 06073 (US); SIMMONS, Jeffrey C., Middletown, CT Connecticut 06457 (US)
(74) Representative: Stevens, Jason Paul

(57) **Abstract**

A system for simulating an operation of a gas turbine engine includes a computing system and a FADEC in electronic communication therewith, the computer system simulating an engine state. In each delta time (where the delta time is the FADEC sampling rate), (1) the FADEC: senses (104) the simulated engine state from the computing system; determines (106) a difference between the sensed state and a predetermined engine state; and outputs (108) engine control commands intended for achieving the predetermined state; and (2) the computing system: receives (110) the FADEC output; utilizes (112) the output in an mxm Jacobian Block, having m active balances; and performs (114) a reduced balance simulation, wherein: fewer than m columns of the Block are analyzed, the analysis (116) of each column defining a Rolling Jacobian Pass; output from the Rolling Jacobian Passes is integrated (118) into the Block, to define an updated simulated engine state; and the updated state is communicated (120) to the FADEC.

## Description

### BACKGROUND

Exemplary embodiments pertain to the art of simulating gas turbine engine states for design and testing of engine controls.

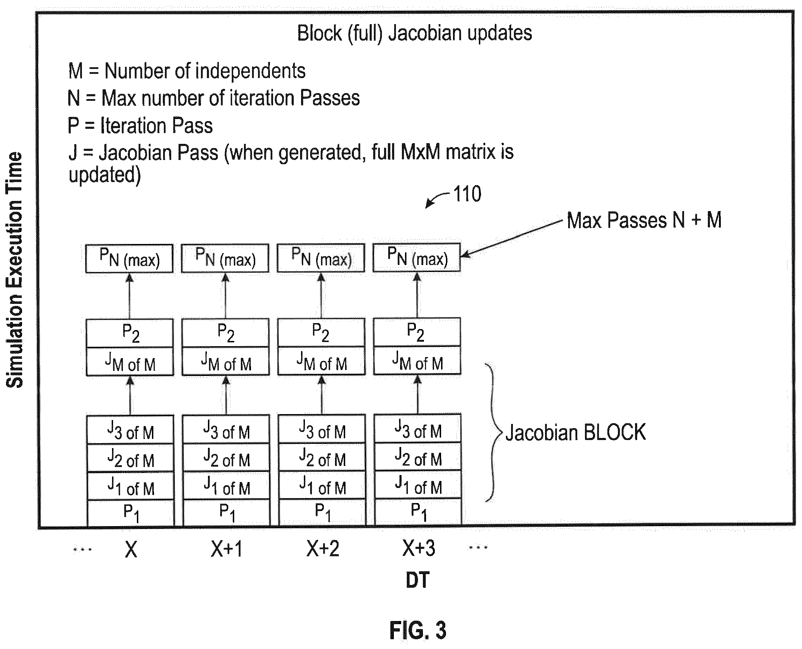

Within known computerized engine simulators, as illustrated in Figure 3, the simulator defines in a Jacobian matrix 110 engine parameters which, in an actual engine, define the engine state as measured by engine sensors. Minimizing the time required for the simulator to resolve the matrix for further processing is important. Innovations to date, such as reducible balance simulations, have narrowed the gap for running aero/thermo simulations in real time. There remains, however, a need for reducible balance simulations that more efficiently utilize the computing fidelity of a Jacobian matrix.

### BRIEF DESCRIPTION

Disclosed is a system for simulating an operation of a gas turbine engine, having a computing system and a FADEC in electronic communication therewith, and the computer system simulating an engine state. In each delta time DT, being the FADEC sampling rate (1) the FADEC is configured to sense the simulated engine state from the computing system; determine a difference between the sensed state and a predetermined engine state; and output engine control commands intended for achieving the predetermined state; and (2) the computing system is further configured to: sense the FADEC output; utilize the output in an mxm Jacobian Block, having m active balances; and perform a reduced balance simulation, wherein: fewer than m columns of the Block are analyzed, the analysis of each column defining a Rolling Jacobian Pass; and output from the Rolling Jacobian Passes is utilized in the Block, to define an updated simulated engine state.

Preferably, according to the system, the number of Rolling Jacobian Passes completed in a delta time DT depends upon: the relative influence of each Rolling Jacobian Pass; and the number of Rolling Jacobian Passes the simulator is capable of completing in the delta time DT.

Preferably, according to the system, the system is configured to perform a maximum of n iteration passes per delta time DT, and a number of iteration passes required for completing the full Block generation is greater than n.

Preferably, for an r x r Jacobian Block, the maximum number of Rolling Jacobian Passes is r.

Preferably, according to the system, the relative influence of each Rolling Jacobian Pass is determined empirically.

Preferably, according to the system, the number of Rolling Jacobian Passes which can be completed in a delta time DT is determined empirically.

Preferably, according to the system, the sensed simulated engine state identifies engine temperatures, pressures, and air and fuel flow rates.

Preferably, according to the system, the FADEC is configured to control engine control surfaces, and air and fuel flow rates.

Preferably, according to the system, the FADEC applies control laws to the engine after applying the control laws to the simulated engine.

Preferably, according to the system, the FADEC is configured to change engine parameters after applying the engine parameters to the simulated engine.

Preferably, according to the system, the FADEC is simulated.

Preferably, according to the system, the FADEC and engine are both simulated.

Further disclosed is a method for simulating an operation of a gas turbine engine on an engine simulator in communication with a FADEC. The method includes a step of simulating, in the computing system, an engine state. In each delta time DT, being the FADEC sampling rate, the FADEC performs: a step of sensing the simulated engine state from the computing system; a step of determining the difference between the sensed state and a predetermined engine state; and a step of outputting engine control commands intended for achieving the predetermined state. In each delta time DT, the engine simulator performs: a step of receiving the FADEC output, a step of utilizing the output in an mxm Jacobian Block, having m active balances; and a step of performing a reduced balance simulation. The reduced balance simulation includes a step of analyzing fewer than m columns of the Block, the analysis of each column defining a Rolling Jacobian Pass; a step of utilizing output from the Rolling Jacobian Passes in the Jacobian Block, to define an updated simulated engine state; and a step of communicating the updated simulated engine state to the FADEC.

Preferably, according to the method, the number of Rolling Jacobian Passes completed in a delta time DT depends upon: the relative influence of each Rolling Jacobian Pass; and the number of Rolling Jacobian Passes the simulator is capable of completing in the delta time DT.

Preferably, according to the method, the system performs a maximum of n iteration passes per delta time DT, and the number of iteration passes required for completing the full Block generation is greater than n.

Preferably, for an r x r Jacobian Block, the maximum number of Rolling Jacobian Passes is r.

Preferably, according to the method, the relative influence of each Rolling Jacobian Pass is determined empirically.

Preferably, according to the method, the number of Rolling Jacobian Passes which can be completed in a delta time DT is determined empirically.

Preferably, according to the method, the simulated sensed state defines engine temperatures, pressures, air and fuel flow rates.

Preferably, according to the method, the FADEC controls engine control surfaces, and air and fuel flow rates.

Preferably, according to the method, the FADEC applies control laws to the engine after applying the control laws to the simulated engine.

Preferably, according to the method, the FADEC is simulated.

Preferably, according to the method, the FADEC and engine are both simulated.

### BRIEF DESCRIPTION OF THE DRAWINGS

The following descriptions should not be considered limiting in any way. With reference to the accompanying drawings, like elements are numbered alike:
FIG. 1 is cross section of a disclosed gas turbine engine;
FIGS. 2A, 2B and 2C illustrate various technical ecosystems for implementing the disclosed embodiments;
FIG. 3 is an illustration of a state of processing Block (full) Jacobian updates;
FIG. 4 is an illustration of a Rolling Jacobian Pass according to the disclosed embodiments; and
FIG. 5 illustrates a method of implementing the disclosed embodiments.

### DETAILED DESCRIPTION

A detailed description of one or more embodiments of the disclosed apparatus and method are presented herein by way of exemplification and not limitation with reference to the Figures.

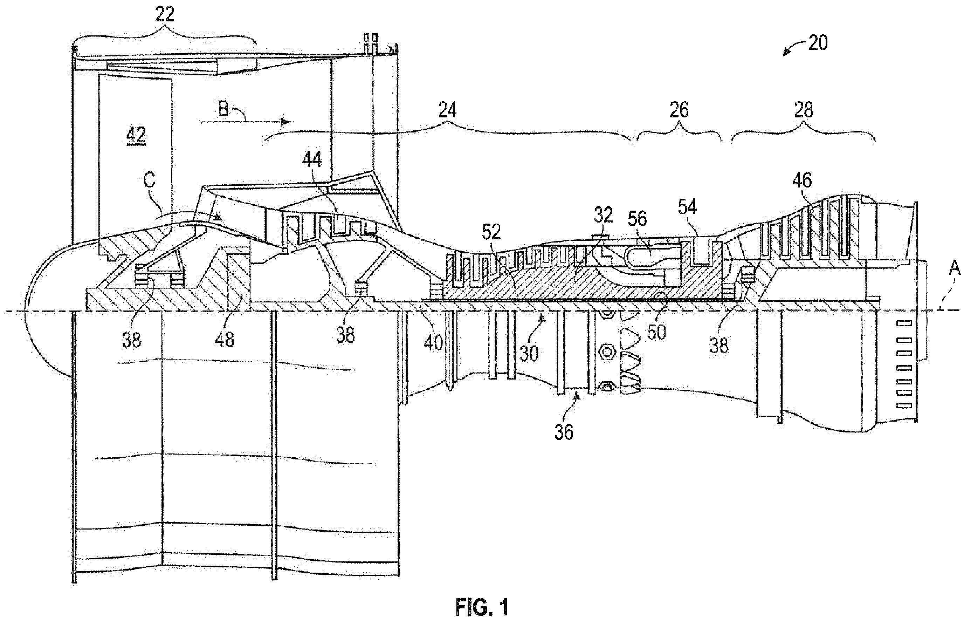

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition - typically cruise at about 0.8 Mach and about 35,000 feet (about 10,700 meters). The flight condition of 0.8 Mach and 35,000 ft (10,700 m), with the engine at its best fuel consumption - also known as "bucket cruise Thrust Specific Fuel Consumption ('TSFC')" - is the industry standard parameter of Ibm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]^{0.5}. The "Low corrected fan tip speed" as disclosed herein according to one non-limiting embodiment is less than about 1150 ft/second (about 350 m/sec).

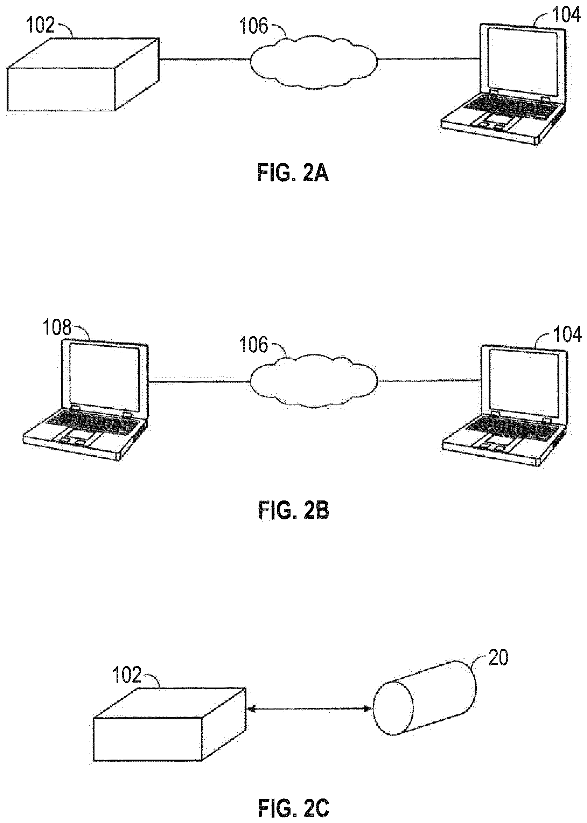

Engine simulations are used in at least three scenarios, illustrated in Figs. 2A - 2C. A first scenario, illustrated in Fig. 2A, is testing an actual Full Authority Digital Engine (or electronics) Control (FADEC) 102 with a simulated engine programed into a connected computer 104. The connection could be, e.g., direct, i.e., wired, via the internet 106, etc. An example of an engine which may be simulated is engine 20 provided in Fig. 1, illustrating related art and disclosed in detail below.

A second scenario, illustrated in Fig. 2B, is simulating both a FADEC 108 and an engine 104, which is helpful when designing the FADEC. Though illustrated separately, the simulations may be on a same computer system. A third scenario, illustrated in Fig. 2C, is embedding the FADEC 102 with simulation software, run during flight and utilizing conditions sensed from the engine 20 to predict outcomes and implement changes in the configuration of the engine 20.

As provided in Figure 3, for each simulated engine, the simulator defines in the Jacobian matrix 110 the measured state, including combustion chamber temperatures, pressures, air and fluid flow rates, fuel/air mixture ratio in the combustor, and the fuel pump shaft speed, discharge flow-rate and the like. Specifically, the state is defined by a Jacobian matrix, that is, an mxm array of numerical values, where m is the number of active balances. Responsive to such measurements, the FADEC applies control laws.

The control laws executed by the FADEC define the configuration of the engine to achieve a desired state which may differ from the measured engine state. For example, the control laws define the inlet area nozzle configuration for a variable area fan nozzle, the vane geometry in the controllable stages, air and flow rates the fuel/air mixture in the combustor, the air stability bleeds, etc.

Iteratively solving for full mxm Jacobian Block, J, is processor and time intensive. Analyzing the Jacobian Block requires the processor to make several iterative passes "p", where p is an integer greater than zero. In a delta time "DT", a real time window in which the simulator has to complete the analysis between FADEC samplings, the number of iterative passes p the simulator is capable of making is a maximum of "n", also an integer greater than zero. The number of required passes p to fully analyze the Block, however, may be greater than n.

At the time of this writing, the FADEC sampling rate can be on the order of 10 milliseconds. Interest in greater control fidelity of the engine state by the FADEC results in an increased complexity of each iteration pass p. Such increased complexity places upward pressure on the simulator processing time when attempting to complete the required iteration passes p. This further minimizes the potential of completing the required iteration passes p during n iterations.

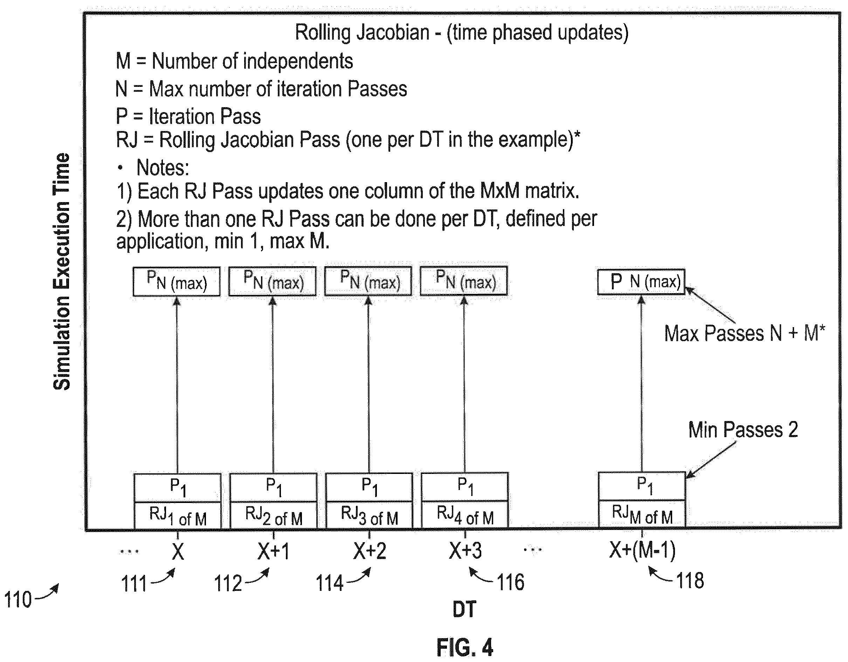

Figure 4 illustrates a technique for performing reduced balance simulations according to an embodiment. The technique is applied when the simulator cannot solve a full mxm Jacobian Block ("Block") 110 by the maximum of n iterations which the system can complete in a delta time DT, i.e., at the FADEC sampling rate. The reduced Jacobian Matrix from the Block 110, with one or more columns 111, 112, 114, 116, 118, is analyzed during each delta time DT, and a complete Jacobian generation occurs in at most m + 1 delta time DT. Completing a pass of a column during a delta time DT is referred to as a "Rolling Jacobian Pass".

During each delta time DT, each of the one or more completed Rolling Jacobian Passes, that is, the results of each analyzed column, is fed to the Block 110, and the updated Block 110 is sampled by the FADEC. The FADEC analyzes the data as the current state of the engine environment (pressures, temperatures, etc) and compares the data with a predetermined state. The FADEC determines needed configuration modifications (e.g., change to the control surfaces, air and fuel flow rates), based on control laws, in an effort to achieve the predetermined state. The FADEC then outputs control data for adjusting the engine control surfaces to meet the needed configuration.

The arrangement of the order of Rolling Jacobian Passes in the sequential delta times DTs (x, x+1...) depends on: (i) the relative influence of each Rolling Jacobian Pass; and (ii) the number of Rolling Jacobian Passes which can be completed in a delta time DT, limited by a maximum of n iterations during the DT which the system can process. These parameters may be determined empirically. All Rolling Jacobian Passes are completed before the system restarts the analysis of the Block 110, that is, to re-execute the first Rolling Jacobian Pass.

For example, in a 4x4 Block, it may be empirically determined that: (i) column 2 has the most significant influencers; (ii) all iterations p of column 2 can be completed within n iterations, i.e., in a delta time DT; (iii) column 1 has the next most significant influencers; (iv) all iterations p of columns 1 and 3 are capable of being completed in n iterations, i.e., in a delta time DT; and (iv) all iterations p of columns 1 and 4 will take more than n iterations and thus are not capable of being completed in a delta time DT. With these parameters identified, the system performs the following sequence of Rolling Jacobian Passes:

| Delta Time | Columns |
|---|---|
| 1 | Column 2 |
| 2 | Column 1, followed by Column 3 |
| 3 | Column 4 |

Once all three delta times DTs have been completed the Rolling Jacobian analysis starts again. That is, each Rolling Jacobian Pass updates at least one column of the Block in a delta time DT. The minimum number of Rolling Jacobian Passes per delta time DT is 1 and the maximum is m.

During each delta time DT, the FADEC samples the state of the simulated engine by analyzing the Block, as a whole. Such sampling occurs even though less than the entire Block has been updated per delta time DT. This is in accordance with the analysis utilizing a reduced balance simulation.

The FADEC is configured to change engine parameters in an effort to achieve the predetermined state. As can be appreciated, the maximum number of Rolling Jacobian Passes which can be completed in a delta time DT is m, which would occur where all Rolling Jacobian Passes can be completed in a set of n iterations. On the other hand, the maximum number of delta times DT to complete all Rolling Jacobian Passes in a Block is m, i.e., when the simulator is capable of completing, with n iterations in a delta time DT, a single Rolling Jacobian Pass. Additionally, for an r x r Jacobian Block, the maximum number of Rolling Jacobian Passes is r. In other words, according to an embodiment, in a time phased rolling update to the Jacobian Block, only a portion of the full Jacobian Block is updated during each delta time DT. This partial Jacobian Block is sufficient because the delta time DT is small, and the values of the updated Block are very close in value to the full mxm Jacobian Block.

As indicated, a system is disclosed for simulating an operation of a gas turbine engine, having a computing system and a FADEC in electronic communication therewith, and the computer system simulating an engine state. In each delta time, being the FADEC sampling rate, (1) the FADEC: senses the simulated engine state from the computing system; determines a difference between the sensed state and a predetermined engine state; and outputs engine control commands intended to achieve the predetermined state; and (2) the computing system: senses the FADEC output; utilizes the output in an mxm Jacobian Block, having m active balances; and performs a reduced balance simulation, wherein: fewer than m columns of the Block are analyzed, the analysis of each column defining a Rolling Jacobian Pass; output from the Rolling Jacobian Passes is integrated into the Block, to define an updated simulated engine state; and the updated state is communicated to the FADEC.

The number of Rolling Jacobian Passes completed in a delta time DT depends upon: the relative influence of each Rolling Jacobian Pass; and the number of Rolling Jacobian Passes the simulator is capable of completing in the delta time DT. The system performs a maximum of n iteration passes per delta time DT, and the number of iteration passes required for completing the full Block generation is greater than n. The relative influence of each Rolling Jacobian Pass is, e.g., determined empirically. The number of Rolling Jacobian Passes which can be completed in a delta time DT is, e.g., also determined empirically.

The simulated sensed state defines engine temperatures, pressures, air and fuel flow rates, and other such variables typically measured for defining the engine state. The FADEC controls engine control surfaces, air and fuel flow rate, and other controllable parameters to influence the engine state.

In one embodiment, the FADEC applies control laws to the engine after applying the control laws to the simulated engine. In this embodiment, the FADEC is connected to an actual engine. In flight, prior to making a decision to apply a specific set of control law parameters, the FADEC runs a simulation to determine the probable outcome of applying the control laws. If success is not optimal, a determination may be made by the FADEC or staff engineer to change the course of action.

According to one embodiment, the FADEC is simulated. For example, in a test environment for designing a FADEC, a real and simulated FADEC may be provided and connected to a real or simulated engine. Expected output from the simulated FADEC may be compared with that of the real FADEC to gauge the accuracy and precision of the designed version before production. Alternatively, both the engine and FADEC are simulated, e.g., during a design phase, and no actual FADEC or actual engine is utilized.

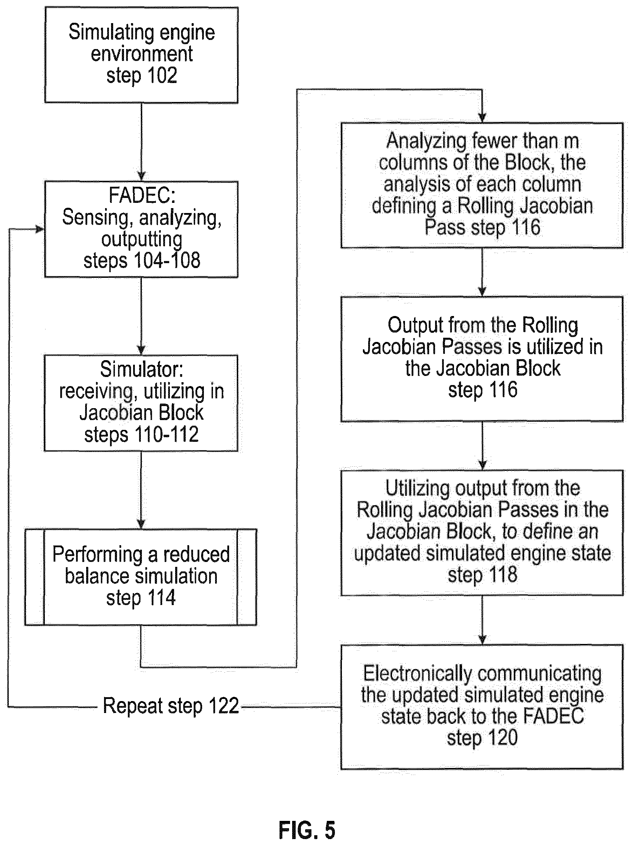

In addition, a method is disclosed and illustrated in Fig. 5 for simulating an operation of a gas turbine engine on a computer system in communication with or as part of a FADEC. The method includes step 102 of simulating, in the computing system, an engine state. In each delta time DT, being the FADEC sampling rate, the FADEC performing: step 104 of sensing the simulated engine state from the computing system; step 106 of determining how the sensed state differs from a predetermined engine state; and step 108 of outputting engine control commands intended for achieving the predetermined state.

In each delta time DT, the computing system performs step 110 of receiving the FADEC output; step 112 of utilizing the output in an mxm Jacobian Block, having m active balances; and step 114 of performing a reduced balance simulation. The reduced balance simulation includes step 116 of analyzing fewer than m columns of the Block, the analysis of each column defining a Rolling Jacobian Pass; step 118 of utilizing output from the Rolling Jacobian Passes in the Jacobian Block, to define an updated simulated engine state; and step 120 of communicating the updated simulated engine state to the FADEC.

Step 122 provides for repeating the reduced balanced simulation steps until all m Rolling Jacobian passes have been completed. Thereafter, the reduced balance analysis cycles back to the first selected column for which the Rolling Jacobian was completed, and the analysis continues through the cycle. The FADEC is sensing the simulated engine state and applies control laws to achieve desired modifications. It can be appreciated that the Jacobian Block is effectively a living matrix in that parameters are constantly changing during the analysis cycle. The changes in any one column are directly analyzed by the simulator at the next iterative pass that touches upon that column.

According to the disclosed method, the number of Rolling Jacobian Passes completed in a delta time DT depends upon: the relative influence of each Rolling Jacobian Pass; and the number of Rolling Jacobian Passes the simulator is capable of completing in the delta time DT. The system performs a maximum of n iteration passes per delta time DT, and the number of iteration passes required for completing the full Block generation is greater than n.

Further, according to the method, the relative influence of each Rolling Jacobian Pass is determined empirically. The number of Rolling Jacobian Passes which can be completed in a delta time DT is also determined empirically. The simulated sensed state defines, e.g., engine temperatures, pressures. In addition, The FADEC controls engine control surfaces, and air and fuel flow rates. Specifically, the FADEC applies control laws to the engine after applying the control laws to the simulated engine.

According to an embodiment of the method, the FADEC is simulated. Alternatively, the FADEC and engine are both simulated.

The benefits of the different embodiments performed by the method are the same as those of the apparatus for simulating an operation of a gas turbine engine, disclosed above.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A method for simulating an operation of a gas turbine engine on an engine simulator in communication with a FADEC, the method comprising:
simulating, in the computing system, an engine state;
wherein in each delta time (DT):
(1) the FADEC performs:
sensing the simulated engine state from the computing system;
determining a difference between the sensed state and a predetermined engine state;
outputting engine control commands intended for achieving the predetermined state; and
(2) the engine simulator performing:
receiving the FADEC output;
utilizing the output in an mxm Jacobian Block, having m active balances; and
performing a reduced balance simulation, including:
analyzing fewer than m columns of the Block, the analysis of each column defining a Rolling Jacobian Pass; and
utilizing output from the Rolling Jacobian Passes in the Block, to define an updated simulated engine state.

2. The method of claim 1, where the number of Rolling Jacobian Passes completed in a delta time DT depends upon:
the relative influence of each Rolling Jacobian Pass; and
the number of Rolling Jacobian Passes the simulator is capable of completing in the delta time DT.

3. The method of claim 2, wherein the system performs a maximum of n iteration passes per delta time DT, and the number of iteration passes required for completing the full Block generation is greater than n.

4. The method of any preceding claim, wherein for an r x r Jacobian Block, the maximum number of Rolling Jacobian Passes is r.

5. The method of claim 2 or any claim dependent thereon, where the relative influence of each Rolling Jacobian Pass is determined empirically.

6. The method of claim 3 or any claim dependent thereon, where the number of Rolling Jacobian Passes which can be completed in a delta time DT is determined empirically.

7. The method of any preceding claim, where the simulated sensed state defines engine temperatures, pressures, air and fuel flow rates.

8. The method of any preceding claim, where the FADEC controls engine control surfaces, air and fuel flow rates.

9. The method of any preceding claim, where the FADEC is simulated.

10. A system for carrying out the method of any preceding claim, comprising:
a computing system and a FADEC in electronic communication therewith, the computer system is configured to simulate an engine state;
wherein, in each delta time (DT):
(1) the FADEC is configured to:
sense the simulated engine state from the computing system;
determine a difference between the sensed state and a predetermined engine state; and
output engine control commands for achieving the predetermined state;
(2) the computing system is further configured to:
receive the FADEC output;
utilize the output in an mxm Jacobian Block, having m active balances; and perform a reduced balance simulation, wherein:
fewer than m columns of the Block are analyzed, the analysis of each column defining a Rolling Jacobian Pass; and
output from the Rolling Jacobian Passes is utilized in the Block, to define an updated simulated engine state.

11. A gas turbine engine including the system of claim 10, where the FADEC is configured to change engine parameters after applying the engine parameters to the simulated engine.
